# EUROPEAN PATENT APPLICATION

(11) **EP 4 542 006 A1**
(43) Date of publication of application: **23.04.2025**
(21) Application number: 24202247.3
(22) Date of filing: 24.09.2024
(51) Int. Cl.: F01D 25/00, F02C 3/30

(54) **COMMON SPRINT AND WATER WASH SYSTEM**

(30) Priority: 17.10.2023 US 202318488196
(71) Applicant: General Electric Technology GmbH, 5400 Baden (CH)
(72) Inventor: GONZALEZ TELLEZ, Victor Alfonso, 76146 Queretaro (MX); NGUYEN, Tho V., Houston, 77041 (US); TEJEDA NÚÑEZ, Ely Edgardo, 76146 Queretaro (MX); GUTIERRÉZ-FRIAS, Jose Antonio, 76146 Queretaro (MX)
(74) Representative: Novagraaf Group

(57) **Abstract**

The present application provides a sprint and water wash system (100) for spraying a volume of water (200) into a compressor (15) of a gas turbine engine (10). The sprint and water wash system (100) may include a number of spray nozzles (120) positioned about the compressor (15), a water manifold (110) in communication with the spray nozzles (120), a pump (260) in communication with the water manifold (110), and a variable frequency drive (275) in communication with the pump (260).

## Description

### TECHNICAL FIELD

The present application and the resultant patent relate generally to gas turbine engines and more particularly relate to an airless sprint and water wash system using a single pump and manifold for a simplified system providing overall increased engine efficiency.

### BACKGROUND

A gas turbine engine conventionally includes a compressor for compressing ambient air and a number of combustors for mixing the flow of air with a flow of fuel to generate hot combustion gases. A turbine receives the flow of hot combustion gases and extracts energy therefrom for powering the compressor and for producing output power for an external load such as an electrical generator and the like.

As the compressor consumes large quantities of air, small quantities of dust, aerosols, and water pass through and may result in deposits on the compressor blades and the like. These deposits may impede airflow through the compressor and over time may degrade the overall performance and efficiency of the gas turbine engine. Gas turbine engines therefore may be washed periodically to clean and remove contaminants from the compressor. Such cleaning operations may be an offline wash operation or an online wash operation. The offline wash operation is performed while the gas turbine engine is shutdown. Although the on-line water wash operation allows cleaning to be performed while the engine is in operation, the on-line wash may somewhat degrade the performance of the overall gas turbine engine.

In a somewhat similar manner, a gas turbine compressor may require less power to operate at a given pressure ratio if intercooling is provided within the compressor. One method of providing intercooling includes spraying droplets of coolant into the inlet of the compressor, *i.e.,* Spray Intercooler or "SPRINT". When the mixture of gas and water is compressed (generally referred to as wet compression), the temperature of the gas increases and provides the driving potential for evaporation. The evaporation of the water cools the gas and so acts as an intercooler. In this instance, the coolant droplets may be sized to be small enough such that the inertia forces are dominated by the drag forces that tend to cause the droplets to flow past the compressor inlet and travel into the subsequent stages of the compressor where the droplets evaporate and provide the desired intercooling. Sprint operations, however, generally require an air extraction from a later stage of the compressor. Such an extraction reduces overall gas turbine engine efficiency.

### SUMMARY

The present application and the resultant patent provide a sprint and water wash system for spraying a volume of water into a compressor of a gas turbine engine. The sprint and water wash system may include a number of spray nozzles positioned about the compressor, a water manifold in communication with the spray nozzles, a pump in communication with the water manifold, and a variable frequency drive in communication with the pump.

The present application and the resultant patent further may provide a method of operating a sprint and water wash system to spray a volume of water into an inlet of a compressor. The method may include the steps of instructing a pump to pump the volume of water at a first flow rate, spraying the volume of water into the inlet of the compressor at the first flow rate to produce droplets of a first size, instructing the pump to pump the volume of water at a second flow rate, and spraying the volume of water into the inlet of the compressor at the second flow rate to produce droplets of a second size.

The present application and the resultant patent further may provide a sprint and water wash system for spraying a volume of water into a compressor of a gas turbine engine. The sprint and water wash system may include a number of spray nozzles positioned about the compressor, a water manifold in communication with the spray nozzles, a piston pump driven by a pump motor in communication with the water manifold, and a variable frequency drive in communication with the piston pump and the pump motor.

These and other features and improvements of this application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine including a compressor, a combustor, a turbine, an external load, a water manifold, and a water supply skid.
Fig. 2 is a schematic diagram of the water supply skid of Fig. 1.

### DETAILED DESCRIPTION

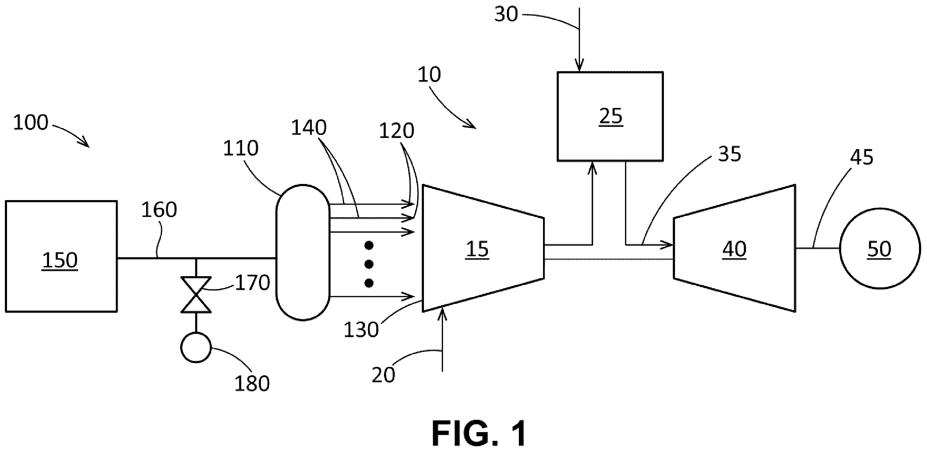

Referring now to the drawings, in which like numerals refer to like elements throughout the several views, Fig. 1 shows a schematic diagram of a gas turbine engine 10 as may be described herein. The gas turbine engine 10 may include a compressor 15. The compressor 15 compresses an incoming flow of air 20. The compressor 15 delivers the compressed flow of air 20 to a number of combustor cans 25. The combustor cans 25 mix the compressed flow of air 20 with a pressurized flow of fuel 30 and ignite the mixture to create a flow of hot combustion gases 35. Although only a single combustor can 25 is shown, the gas turbine engine 10 may include any number of combustor cans 25 positioned in a circumferential array and the like. Alternatively, the combustor 25 may be an annular combustor. The flow of combustion gases 35 is in turn delivered to a turbine 40. The flow of combustion gases 35 drives the turbine 40 to produce mechanical work. The mechanical work produced in the turbine 40 drives the compressor 15 via a rotor shaft 45. The turbine 40 and the rotor shaft 45 also may drive an external load 50 such as an electrical generator and the like.

The gas turbine engine 10 may use natural gas, hydrogen gas, various types of syngas, liquid fuels, and/or other types of fuels and blends thereof. The gas turbine engine 10 may be any one of a number of different gas turbine engines offered by General Electric Company of Schenectady, New York, including, but not limited to, those such as a 7-series or a 9-series heavy duty gas turbine engines as well as LM6000 and LM9000 aeroderivative gas turbine engines. The gas turbine engine 10 may be part of a simple cycle or a combined cycle power generation system or other types of generation systems. The gas turbine engine 10 may have different configurations and may use other types of components. Other types of gas turbine engines also may be used herein. Multiple gas turbine engines, other types of turbines, and other types of power generation equipment also may be used herein together.

Fig. 1 also shows an example of a sprint and water wash system 100 as may be described herein. The sprint and water wash system 100 may include a water manifold 110. The water manifold 110 may have any convenient size, shape, and configuration. The sprint and water wash system 100 may include a number of spray nozzles 120 positioned about an inlet 130 of the compressor 15. More than ten spray nozzles 120 may be used. In this example, seventeen spray nozzles 120 may be used. The total number and size of the spray nozzles 120 may vary with the geometry of the compressor 15 and other types of performance parameters. The spray nozzles 120 may be in communication with the water manifold 110 via a number of nozzle conduits 140.

The water manifold 110 of the sprint and water wash system 100 may be in communication with a water supply skid 150. The water supply skid 150 may be remotely positioned from the gas turbine engine 10 or otherwise situated at any distance. The water manifold 110 may be in communication with the water supply skid 150 via a manifold conduit 160. The manifold conduit 160 may have manifold conduit valve 170 and a manifold conduit pressure sensor 180 thereon. The manifold conduit valve 170 and the manifold conduit pressure sensor 180 may be of conventional design. Other components and other configurations may be used herein.

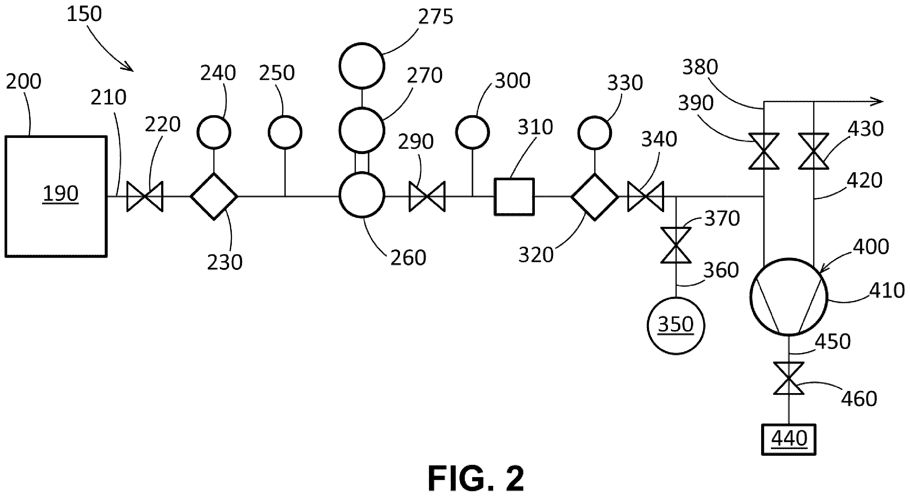

Fig. 2 shows the details of the water supply skid 150. The water supply skid 150 may include a water supply 190. The water supply 190 may have any convenient size, shape, or configuration. The water supply 190 may hold a volume of water 200. The volume of water 200 preferably may be a volume of demineralized water and the like. The volume of water 200 may be fed into the sprint and water wash system 100 via a skid conduit 210 and an incoming water skid valve 220. The incoming water skid valve 220 may be an on/off valve such as a ball valve and the like.

The volume of water 200 then may flow through a low pressure filter 230. The low pressure filter 230 may be of conventional design. A low differntial pressure filter pressure sensor 240 may be used therewith. As the low pressure filter 230 catches contaminates and the like in the volume of water 200, the pressure through the low pressure filter 230 may increase. The low pressure filter pressure sensor 240 may indicate when the pressure therethrough has exceeded a normal operating parameter. The low pressure filter pressure sensor 240 may be of conventional design. A temperature sensor 250 may be positioned downstream of the low pressure filter pressure sensor 240. The temperature sensor 250 may be of conventional design.

The water supply skid 150 further includes a pump 260 driven by a pump motor 270. The pump 260 may be a piston pump. The pump motor 270 may have a Variable Frequency Drive 275, *i.e.,* a frequency inverter, such that the pump 260 may operate at any desired speed. Given such, the pump 260 may provide the volume of water 200 at any desired pressure and flow rate. Operation of the pump 260 and the pump motor 270 is controlled by a controller 280 as will be described in more detail below. Other components and other configurations may be used herein.

A back pressure regulator 290 may be positioned downstream of the pump 260. The back pressure regulator 290 may be of conventional design. The back pressure regulator 290 may protect the pump 260 in minimum flow/pressure conditions. A pump pressure sensor 300 may be positioned downstream of the back pressure regulator 290. The pump pressure sensor 300 may be of conventional design. The pump pressure sensor 300 ensures that the pump 260 is operating within a safe pressure range. A flow meter 310 may be positioned downstream of the pump pressure sensor 300. The flow meter 310 may be of conventional design. The flow meter 310 may ensure that the pump 260 is operating within a safe flow rate range. A high pressure filter 320 may be positioned downstream of the flow meter 310. The high pressure filter 320 may be of conventional design. A high differential pressure filter pressure sensor 330 may be used therewith. As the high pressure filter 320 catches contaminates and the like in the volume of water 200, the pressure through the high differential pressure filter 320 may increase. The high pressure filter pressure sensor 330 may indicate when the pressure therethrough has exceeded a normal operating parameter. The high pressure filter pressure sensor 330 may be of conventional design. A water output valve 340 may be positioned downstream of the high pressure filter 320. The water output valve 340 may be an on/off valve such as a solenoid valve and the like. Other components and other configurations may be used herein.

The water supply skid 150 also may include a purge air source 350. The purge air source 350 may be any convenient source of pressurized air of any volume. The purge air source may merge with the skid conduit 210 at a T-connection downstream of the water output valve 340 via a purge air conduit 360 and a purge air valve 370. The purge air valve 370 may be of conventional design.

The skid conduit 210 may continue to a skid exit conduit 380 at a T-connection. The skid exit conduit 380 may have a skid exit conduit valve 390 thereon. The skid exit conduit valve 390 may be of conventional design and may be an on-off valve such as a solenoid valve and the like. The skid exit conduit 390 merges into the skid conduit 210 at a T-connection such that the volume of water 200 may flow to the water manifold 110. Other components and other configurations may be used herein.

The water supply skid 150 also may include a water drain system 400 so as to drain the sprint and water wash system 100 of water to ensure than an excess volume of water is not delivered to the compressor 15. The water drain system 400 system includes a vacuum ejector venturi pump 410. Generally describe, the vacuum ejector venturi pump 410 may be a mechanical device with no moving parts. The vacuum ejector venturi pump 410 mixes two fluid streams based on a momentum transfer. The vacuum ejector venturi pump 410 may be in communication with the skid conduit 210 via an incoming venturi pump conduit 420 at a T-connection via an incoming venturi pump conduit valve 430. The incoming venturi pump conduit valve 430 may be of conventional design and may be an on/off valve such as a solenoid valve and the like.

The vacuum ejector venturi pump 410 also may be in communication with a skid drain 440 via a drain conduit 450 and a drain valve 460. The skid drain 440 may have any convenient size, shape, or configuration. The drain valve 460 may be of conventional design and may be an on/off valve such as a solenoid valve and the like. Other components and other configurations may be used herein.

As described above, operation of the sprint and water wash system 100 may be governed by the controller 280. Generally described, the controller 280 is a conventional microprocessor based system. The controller 280 may include a memory, an input/output (I/O) interface, an external I/O device/resource, and an external storage system. In general, the controller 280 executes computer program code that may be stored in the memory and/or the storage system. The controller 280 is only an example of various possible combinations of hardware and software that may be used herein.

In use, the controller 280 directs the pump 260/pump motor 270 to operate in either sprint mode or water wash mode. As described above, the piston driven pump 260 is controlled by the Variable Frequency Drive 275 to provide flow required for sprint mode in the high, mid, and low flow range. The Variable Frequency Drive 275 also solves the Sprint Primary Frequency requirements which require variable flow in a short period of time to maintain frequency stability. The spray nozzle 120 may be sized to provide the required droplet size for both modes, meaning large droplet size for water wash and small droplet size for sprint. The respective droplet size for sprint mode may be described in terms of Sauter mean diameter (SMD). The droplet size may vary and may be increased as needed by reducing the pressure of the back pressure regulator 290 for water wash mode. Likewise, the pump 260 may provide the required flow rate for both modes. For example, the flow rate may be less than about 8 gpm for water wash but about 9 to 22 gpm for sprint. The flow rate may vary. These ranges also ensure that the pump 260 works in a safe pressure and flow range.

In either mode, the controller instructs the pump 260/pump motor 270 to pump at the required pressure and flow rate. Specifically, the volume of water 200 from the water supply 190 on the water supply skid 150 is pumped through the skid conduit 210 to the manifold conduit 160 to the water manifold 110. The volume of water 200 then flows through the nozzle conduits 140 to the spray nozzles 120 where the water is sprayed into the inlet 130 of the compressor 15.

Particularly when the sprint mode is completed, it is important that excess water is not injected into the compressor 15. The controller 280 therefore turns off the pump260/pump motor 270, closes the water output valve 340, and opens the purge air valve 370 on the purge air source 350. Likewise, the incoming venturi pump conduit valve 430 on the incoming venturi pump conduit 420 of the water drain system 400 is opened. The flow of purge air thus creates suction in the vacuum ejector venturi pump 410. This suction pulls any water remaining in the manifold conduit 160 and the water manifold 110 into the vacuum ejector venture pump 410 and into the skid drain 440.

The sprint and water wash system 100 thus uses the single water manifold 110 and the single set of spray nozzles 120 for both sprint mode and water wash mode. Specifically, the Variable Frequency Drive 275 allows the pump 260/pump motor 270 to provide the required droplet size and flow rate for either mode. The sprint and water wash system 100 thus provides a simplified system with overall cost savings by merging the respective systems. Significantly, the sprint mode does not require an air extraction from the compressor 15 as is used in conventional systems. The elimination of the air extraction thus improves overall gas turbine engine efficiency.

It should be apparent that the foregoing relates only to certain embodiments of the present application and resultant patent. Numerous changes and modifications may be made herein by one of ordinary skill in the art without departing from the general spirit and scope of the invention as defined by the following claims and the equivalents thereof.

Further aspects of the invention are provided by the subject matter of the following clauses:
1. A sprint and water wash system for spraying a volume of water into a compressor of a gas turbine engine, comprising: a plurality of spray nozzles positioned about the compressor; a water manifold in communication with the plurality of spray nozzles; a pump in communication with the water manifold; and a variable frequency drive in communication with the pump.
2. The sprint and water wash system of any preceding clause, wherein the plurality of spray nozzles comprises more than ten spray nozzles.
3. The sprint and water wash system of any preceding clause, further comprising a water supply skid in communication with the water manifold.
4. The sprint and water wash system of any preceding clause, wherein the water supply skid comprises a water supply with the volume of water therein.
5. The sprint and water wash system of any preceding clause, wherein the water supply skid comprises a filter thereon.
6. The sprint and water wash system of any preceding clause, wherein the water supply skid comprises a pressure sensor thereon.
7. The sprint and water wash system of any preceding clause, wherein the water supply skid comprises a temperature sensor thereon.
8. The sprint and water wash system of any preceding clause, wherein the water supply skid comprises a flow meter thereon.
9. The sprint and water wash system of any preceding clause, wherein the pump is positioned on the water supply skid.
10. The sprint and water wash system of any preceding clause, wherein the pump comprises a piston pump.
11. The sprint and water wash system of any preceding clause, further comprising a pump motor in communication with the pump and the variable frequency drive.
12. The sprint and water wash system of any preceding clause, further comprising a water drain system.
13. The sprint and water wash system of any preceding clause, wherein the water drain system comprises a vacuum ejector pump.
14. The sprint and water wash system of any preceding clause, wherein the water drain system comprises a purge air source in communication with the vacuum ejector pump.
15. A method of operating a sprint and water wash system to spray a volume of water into an inlet of a compressor, comprising: instructing a pump to pump the volume of water at a first flow rate; spraying the volume of water into the inlet of the compressor at the first flow rate to produce droplets of a first size; instructing the pump to pump the volume of water at a second flow rate; and spraying the volume of water into the inlet of the compressor at the second flow rate to produce droplets of a second size.
16. A sprint and water wash system for spraying a volume of water into a compressor of a gas turbine engine, comprising: a plurality of spray nozzles positioned about the compressor; a water manifold in communication with the plurality of spray nozzles; a piston pump driven by a pump motor in communication with the water manifold; and a variable frequency drive in communication with the piston pump and the pump motor.
17. The sprint and water wash system of any preceding clause, further comprising a water supply skid in communication with the water manifold.
18. The sprint and water wash system of any preceding clause, wherein the water supply skid comprises a water supply with the volume of water therein, a filter, a pressure sensor, a temperature sensor, and a flow meter.
19. The sprint and water wash system of any preceding clause, further comprising a water drain system.
20. The sprint and water wash system of any preceding clause, wherein the water drain system comprises a vacuum ejector pump in communication with a purge air source.

## Claims

1. A sprint and water wash system (100) for spraying a volume of water (200) into a compressor (15) of a gas turbine engine (10), comprising:
a plurality of spray nozzles (120) positioned about the compressor (15);
a water manifold (110) in communication with the plurality of spray nozzles (120);
a pump (260) in communication with the water manifold (110); and
a variable frequency drive (275) in communication with the pump (260).

2. The sprint and water wash system (100) of claim 1, wherein the plurality of spray nozzles (120) comprises more than ten spray nozzles (120).

3. The sprint and water wash system (100) of claim 1, further comprising a water supply skid (150) in communication with the water manifold (110).

4. The sprint and water wash system (100) of claim 3, wherein the water supply skid (150) comprises a water supply (190) with the volume of water (200) therein.

5. The sprint and water wash system (100) of claim 3, wherein the water supply skid (140) comprises a filter (230, 320) thereon.

6. The sprint and water wash system (100) of claim 3, wherein the water supply skid (150) comprises a pressure sensor (240, 300, 330) thereon.

7. The sprint and water wash system (100) of claim 3, wherein the water supply skid (150) comprises a temperature sensor (250) thereon.

8. The sprint and water wash system (100) of claim 3, wherein the water supply skid (150) comprises a flow meter (310) thereon.

9. The sprint and water wash system (100) of claim 3, wherein the pump (260) is positioned on the water supply skid (150).

10. The sprint and water wash system (100) of claim 1, wherein the pump (260) comprises a piston pump (260).

11. The sprint and water wash system (100) of claim 1, further comprising a pump motor (270) in communication with the pump (260) and the variable frequency drive (275).

12. The sprint and water wash system (100) of claim 1, further comprising a water drain system (400).

13. The sprint and water wash system (100) of claim 12, wherein the water drain system (400) comprises a vacuum ejector pump (410).

14. The sprint and water wash system (100) of claim 13, wherein the water drain system (400) comprises a purge air source (300) in communication with the vacuum ejector pump (410).

15. A method of operating a sprint and water wash system (100) to spray a volume of water (200) into an inlet (130) of a compressor (15), comprising:
instructing a pump (260) to pump the volume of water (200) at a first flow rate;
spraying the volume of water (200) into the inlet (130) of the compressor (15) at the first flow rate to produce droplets of a first size;
instructing the pump (260)to pump the volume of water (200) at a second flow rate; and
spraying the volume of water (200) into the inlet (130) of the compressor (15) at the second flow rate to produce droplets of a second size.
